# EUROPEAN PATENT APPLICATION

(11) **EP 2 711 822 A2**
(43) Date of publication of application: **26.03.2014**
(21) Application number: 13184664.4
(22) Date of filing: 17.09.2013
(51) Int. Cl.: G06F 3/0483, G06F 3/0484, G06F 3/0488

(54) **Method for determining three-dimensional visual effect on information element using apparatus with touch sensitive display**

(30) Priority: 18.09.2012 US 201213622307
(71) Applicant: Ixonos OYJ, 00810 Helsinki (FI)
(72) Inventor: Kainiemi, Pasi, 33800 Tampere (FI); Kainiemi, Petri, 37630 Valkeakoski (FI); Paihonen, Sami, Saratoga, CA California 95070 (US)
(74) Representative: Espatent Oy

(57) **Abstract**

An apparatus including a touch sensitive display for displaying an information element; a detector configured to detect touches of a user on the touch sensitive display; at least one processor; and at least one memory including computer program code. The memory and the computer program code are configured to, with the at least one processor, cause the apparatus at least to: display the information element; detect a predefined gesture on the touch sensitive display based on the touches of the user; and determine a three-dimensional visual effect, on information element, associated with the predefined gesture. Furthermore, the apparatus is caused to display information element utilizing the three-dimensional visual effect.

## Description

### TECHNICAL FIELD

The present invention generally relates to apparatuses with touch screens. The invention relates particularly, though not exclusively, to determining a three-dimensional visual effect on an information element using an apparatus with a touch sensitive display.

### BACKGROUND ART

Touch-sensitive surfaces are widely used to provide a user with an enhanced pointing and displaying interface. Such surfaces may be used as touch-sensitive displays or touch-sensitive pads with normal displays, for example.

There is variety of technologies for the touch-sensitive surfaces, such as resistive, capacitive, acoustic, and infrared. The capacitive touch-sensitive surfaces are currently very popular and typically provide multiple applications and services.

The user operates a handheld portable apparatus with different applications. Navigating electronic documents, images, contact cards, directories etc. is one common application type. Typically navigation application focuses on presenting information content to the user in two-dimensions. Such content may be for example images on a display or a grid of application shortcut icons. Three-dimensional content typically presented to the user requires embedded three-dimensional elements provided in the apparatus that cannot be used for wide variety of information elements. A solution is thus needed for improving the user experience when navigating with different types of information elements utilizing three-dimensional visual effects.

### SUMMARY

According to a first example aspect of the invention there is provided an apparatus comprising:
a touch sensitive display for displaying an information element;
a detector configured to detect touches of a user on the touch sensitive display;
at least one processor; and
at least one memory including computer program code, the at least one memory and the computer program code being configured to, with the at least one processor, cause the apparatus at least to:
   display the information element;
   detect a predefined gesture on the touch sensitive display based on the touches of the user;
   determine a three-dimensional visual effect, on the information element, associated with the predefined gesture; and
   display the information element utilizing the three-dimensional visual effect.

In an embodiment, the at least one memory and the computer program code being further configured to, with the at least one processor, cause the apparatus at least to:
determine an application providing the information element; and
determine the three-dimensional visual effect, on the information element, associated with the predefined gesture and the determined application.

In an embodiment, the at least one memory and the computer program code being further configured to, with the at least one processor, cause the apparatus at least to:
maintain a set of three-dimensional visual effects with associated gestures for each application.

In an embodiment, the at least one memory and the computer program code being further configured to, with the at least one processor, cause the apparatus at least to:
determine the three-dimensional visual effect on-the-fly by a three-dimension graphics engine.

In an embodiment, the information element displayed on the touch-sensitive display comprises a two-dimensional information element.

In an embodiment, the information element comprising at least one of the following:
- a page of a document;
- a digital image;
- a contact card;
- screen lock information;
- a message; and
- a directory.

In an embodiment, the three-dimensional visual effect relates to at least one of the following:
- turning a page of a document;
- touching a page of a document;
- navigating a directory;
- trashing a document;
- opening a document;
- closing a document;
- moving a digital image;
- scrolling a digital image;
- opening a screen lock;
- opening a screen lock information element;
- opening a user alert item;
- scrolling a contact card; and
- scrolling a message.

In an embodiment, the information element comprises a two-dimensional information element. The apparatus may be further caused to:
determine a three-dimensional visual effect, on the two-dimensional information element, associated with the predefined gesture;
process the two-dimensional information element using the three-dimensional visual effect to provide a three-dimensional information element; and
display the three-dimensional information element utilizing the three-dimensional visual effect.

In an embodiment, the information element comprises a three-dimensional information element. The apparatus may be further caused to:
determine a three-dimensional visual effect, on the three-dimensional information element, associated with the predefined gesture;
process the three-dimensional information element using the three-dimensional visual effect; and
display the three-dimensional information element utilizing the three-dimensional visual effect.

According to a second example aspect of the invention there is provided a method comprising:
displaying an information element;
detecting a predefined gesture on a touch sensitive display based on touches by a user;
determining a three-dimensional visual effect, on the information element, associated with the predefined gesture; and
displaying the information element utilizing the three-dimensional visual effect.

In an embodiment, the method further comprising:
determining an application providing the information element; and
determining the three-dimensional visual effect, on the information element, associated with the predefined gesture and the determined application.

In an embodiment, the method further comprising:
determining the three-dimensional visual effect on-the-fly by a three-dimension graphics engine.

In an embodiment, the method further comprising:
defining a sweep function configured to detect, using the detector, a sweep gesture on the touch sensitive display between a first and a second touch point; and
detecting the predefined gesture on a touch sensitive display using the sweep function.

According to a third example aspect of the invention there is provided a computer program embodied on a computer readable medium comprising computer executable program code which, when executed by at least one processor of an apparatus, causes the apparatus to:
display an information element;
detect a predefined gesture on a touch sensitive display based on touches by the user;
determine a three-dimensional visual effect, on the information element, associated with the predefined gesture; and
display the information element utilizing the three-dimensional visual effect.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:

Fig. 1 shows a schematic picture of an apparatus according to an example embodiment of the invention;

Fig. 2 shows a schematic picture of a software architecture for a 3D graphical engine of an apparatus according to an example embodiment of the invention;

Fig. 3 shows a flow diagram showing operations in an apparatus in accordance with an example embodiment of the invention;

Fig. 4 presents an example block diagram of an apparatus in which various embodiments of the invention may be applied; and

Fig. 5 shows a schematic picture of an apparatus according to an example embodiment of the invention;

### DETAILED DESCRIPTION

In the following description, like numbers denote like elements.

In an embodiment, a 3D graphics engine utilizes only a CPU (Central Processing Unit) of the apparatus without need of the GPU (Graphics Processing Unit).

In an embodiment, a 3D graphics engine utilizes a CPU (Central Processing Unit) and a GPU (Graphics Processing Unit) of an apparatus to deliver high-quality graphics with high performance. The engine removes limitations of individual operating systems and allows the use of more creativity when designing customer-branded user interfaces. 2D and 3D user interfaces may be designed and implemented for different platforms, for example Android. Android is a Linux-based operating system for mobile devices. The 3D graphics engine may bring 3D experiences on high and low-end apparatuses enabling creation of improved graphics for any device manufacturer.

In an embodiment, the underlying design principles of the 3D engine rely on utilizing 3D effects to mimic the way objects behave in the physical world, thus creating foreseeable interactions that match users' expectations. The 3D engine may be used for core functions such as contacts, calendar, screen lock and gallery, for example. For example, when a user of a touch screen apparatus drags a corner of a digital image to move it, the experience resembles lifting an actual physical photo from the table: the photo bends and reflects light according to the way it is moved. Following the same logic, messages and contact cards have their own characteristics that determine how they can be moved around and interacted with. 3D interactions feel as natural and engaging as possible for the end users.

In an embodiment, the 3D engine is a cross-platform engine for any platform supporting separate GPU and OpenGL® ES, for example. OpenGL® ES is a royalty-free, cross-platform API for full-function 2D and 3D graphics on embedded systems.

In an embodiment, the 3D engine may comprise at least one of the following features:
- Written in C++
- Using OpenGL ES 2
- UI components, e.g. text area, button, image area, panel, slider
- Vector, Matrix and/or Quaternion math
- Bitmap loading using Freelmage
- Compressed bitmap loading
- Multi-texturing
- Bitmap based font rendering
- Scene management with frustum culling
- Particle system for visual effects
- AABB and plane collision objects
- Particle system for physics simulation for paper
- Texture management including deferred texture loading
- Material and shader management
- Mesh management
- Directional lighting
- Gloss reflection
- Planar reflection
- Drop-shadow
- Camera with motion control and key framer
- Render-to-texture

In an embodiment, the 3D engine may provide improved features for touch screen apparatuses. The engine provides graphical effects as responses to user touches on the touch screen that emulate physical item characteristics. The user interface may provide natural responses for applications such as messaging, documents, address book, directories, calendar and photo gallery. For example, when the user drags a photo from the corner, the photo responses with bending and reflecting light in realistic way, depending on the movement created by the user. Thus 3D effects may be provided to the user, triggered by the user.

In an embodiment, the 3D engine utilizes optimized 3D image processing, CPU and GPU of the apparatus. Such approach enables providing 3D user interfaces easily to various platforms, such as Tizen, Android, iOS and Windows Phone, for example.

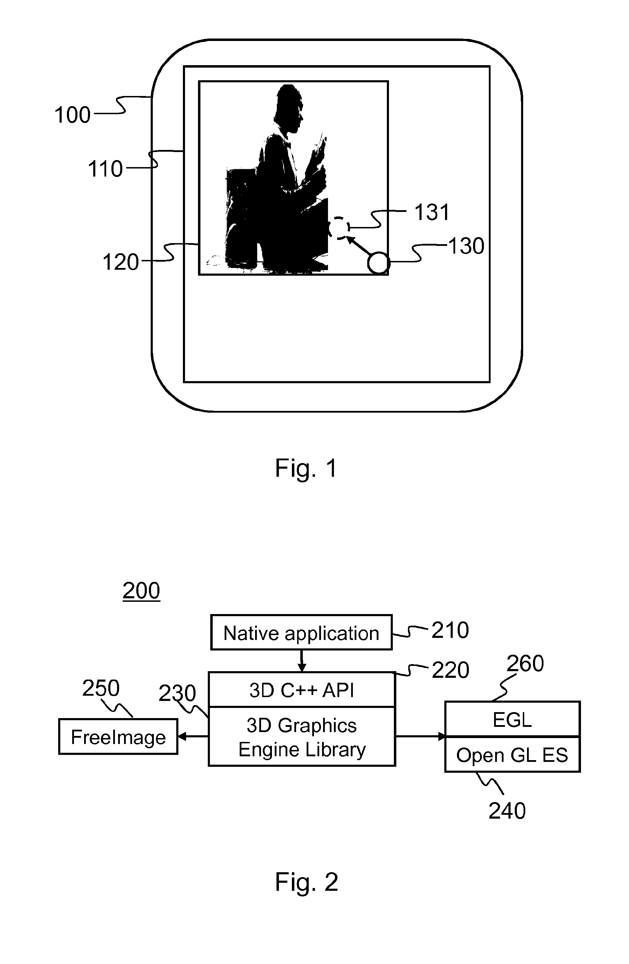

Fig. 1 shows a schematic picture of an apparatus 100 according to an example embodiment of the invention. The apparatus 100 comprises a touch-sensitive surface, such as a touch sensitive display 110. The apparatus 100 may be held and operated in a vertical mode or a landscape mode. The touch sensitive display 110 is configured to display information to a user of the apparatus 100. Furthermore, the apparatus comprises a detector configured to detect a touch point of the user on the touch sensitive display 110. The touch sensitive display comprises a predetermined viewing area for an information element 120, such as a photo for example. The information element 120 may comprise at least one of a document, a directory, a photo, a calendar item, a screen lock item, and a contact card, for example.

In an embodiment, the information element 120 may be a two-dimensional or a three-dimensional information element.

In an embodiment, an information element 120, for example an image, may be displayed on a display. The image is displayed as a realistic information element that may have three-dimensional visual effects, similar to a real paper photo. The user can grab the image on the display and act with using different gestures triggering the three-dimensional visual effects. For example, using a finger, the image may be moved around the display. Furthermore, using at least one finger, a corner of the image may be raised up by pushing the corner of the image from the outside of the image. The raised corner may be grabbed by at least two fingers just like in real life and turn the image as a paper photo, for example. Still furthermore, the user may grab the image using at least two fingers from the middle of the image to as if to wrinkle the image. Such gesture may correspond to delete the image, as if to wrinkle the real paper photo and throw it to trash can. After the wrinkle gesture the image may be displayed wrinkled on the display and prompt something like "Delete item/image/photo? Yes/OK, No/Cancel" to ensure the deletion from the user before actually deleting it. Another gesture may be a flicking gesture on the image, which moves the image to a predefined folder, for example, and the move may be visualized on the display. Furthermore, an unwrinkle gesture may correspond to undelete/undo effect visualized to the user on the display.

In an embodiment, the user may touch the display 110 in a certain location. Such location is represented as a touch point 130. The touch point 130 may be determined using the detector of the apparatus 100. In case the touch point 130 is located over the information element 120, as shown in Fig. 1, a gesture may be detected from the touch point 130. The user may provide a second touch point 131 on the touch sensitive display 120 in a similar fashion as described for the first touch point 130. The user may release his finger from the touch sensitive display 120 between the first and the second touch points 130-131 or the user may sweep his finger between the points 130-131, for example. Based on the second touch point 131, the gesture may be detected and an associated three-dimensional visual effect may be determined for the information element 120. The information element 120 may be a two-dimensional information element or a three-dimensional information element. After utilizing the three-dimensional visual effect the information element 120 may be regarded as three-dimensional information element.

In an embodiment, the three-dimensional visual effect may comprise at least one of the following:
- folding a corner of an information element;
- wrinkling an information element;
- twisting an information element;
- peeling an information element; and
- moving an information element.

Fig.2 shows a schematic picture of a software architecture 200 for a 3D graphics engine of an apparatus according to an example embodiment of the invention.

The 3D graphics engine SW architecture consists of different parts - a graphics engine library 230, a 3D C++ API 220, open source image processing library 250, such as Freelmage, an EGL windowing system 260 and an OpenGL ES 240. Through the application programming interface (API) 220, a native application 210 may communicate with the 3D graphics engine.

In an embodiment, the 3D graphics engine may utilize native platform graphics interface (EGL) 260, such as Khronos EGL and embedded accelerated 3D graphics, such as OpenGL ES API 240, for example. In Fig.2 those functions are described as a combined block of EGL & Open GL ES 240-260 connected to a 3D graphics engine library 230. The OpenGL ES 240 and EGL 260 are window-system and operating system independent, which means that the 3D graphics engine is relatively easy to port to any existing platform supporting OpenGL ES and EGL. The 3D graphics engine SW architecture 200 may follow object-oriented programming (OOP) principles and be implemented with C++, for example.

In an embodiment, an open source image processing library 250 may be utilized, such as Freelmage, for example. Bitmap loading in the 3D graphics engine may be done by using the open-source image processing library 250.

In an embodiment, OpenGL® ES 240 is a royalty-free, cross-platform API for full-function 2D and 3D graphics on embedded systems - including consoles, phones, appliances and vehicles. The OpenGL® ES 240 may consist subsets of desktop OpenGL, and create a flexible and powerful low-level interface between software and graphics acceleration. The OpenGL® ES 240 may include profiles for floating-point and fixed-point systems. The EGL™ 260 may comprise features for portably binding to native windowing systems. The OpenGL® ES 240 may enable full programmable 2D and 3D graphics.

In an embodiment, the EGL™ 260 is an interface between Khronos rendering APIs such as OpenGL ES 240 or OpenVG and the underlying native platform window system. It handles graphics context management, surface/buffer binding, and rendering synchronization and enables high-performance, accelerated, mixed-mode 2D and 3D rendering using other Khronos APIs. EGL 260 also provides interoperability to enable efficient transfer of data between APIs - for example between a video subsystem running OpenMAX AL and a GPU running OpenGL ES.

The EGL™ 260 provides mechanisms for creating rendering surfaces onto which client APIs like OpenGL ES and OpenVG may draw, create graphics contexts for client APIs, and synchronize drawing by client APIs as well as native platform rendering APIs. This enables seamless rendering using both OpenGL ES 240 and OpenVG for high-performance, accelerated, mixed-mode 2D and 3D rendering.

In an embodiment, OpenGL® (Open Graphics Library) provides a standard specification defining an API (Application Programming Interface) that may be used when writing applications that produce 2D and 3D graphics. (Other languages, such as Java, may define bindings to OpenGL API through own standard process). The interface includes multiple function calls that can be used to draw scenes from simple primitives. Graphics processors, multi-media processors, and even general purpose CPU's can then execute applications that are written using OpenGL function calls. OpenGL ES 240 (embedded systems) is a variant of OpenGL that is designed for embedded devices, such as mobile wireless phones, digital multimedia players, personal digital assistants (PDA's), or video game consoles.

In an embodiment, EGL™ 260 (Embedded Graphics Library) is a platform interface layer between multi-media client API's, such as OpenGL ES 240, and the underlying platform multi-media facilities, such as 3D graphics engine library 230. EGL™ 260 may handle graphics context management, rendering surface creation, and rendering synchronization and enables high-performance, hardware accelerated, and mixed-mode 2D and 3D rendering. For rendering surface creation, EGL 260 may provide mechanisms for creating surfaces onto which client API's (such as native application 210 API's) can draw and share. EGL 260 may provide support for linear and sRGB (standard red green blue) surfaces, for example.

In an embodiment, parameters of the displayed three-dimensional information element may be adjusted in real-time. Such parameters may comprise, for example, material, stiffness and reflectivity of the displayed information element. Adjusting the visual effects in real-time (on-the-fly) instead of using embedded visual effects enables improved visual outlook and user experience.

The EGL 260 may provide:
- Mechanisms for creating rendering surfaces (windows, pbuffers, pixmaps) onto which client APIs can draw and share
- Methods to create and manage graphics contexts for client APIs
- Ways to synchronize drawing by client APIs as well as native platform rendering APIs.
- Advanced API Interoperability
- The EGLStreams extension provides a powerful but easily programmed API to control how a stream of images flow between Khronos APIs to enable advanced applications such as Augmented Reality with full hardware acceleration.

In an embodiment, a native application 210 may use API, such as 3D C++ API 220 to define and control behavior of a physics model encapsulated by a graphics engine, such as 3D Graphics Engine Library 230 to create visual motion and effects. User input may be used to provide real-time interactivity with the physics and visuals.

In an embodiment, the graphics engine 230, such as the 3D Graphics Engine Library may utilize image library 250, such as an open-source library Freelmage to create texture resources from image files which may be used in various texture-based effects while rendering.

In an embodiment, the graphics engine 230, such as the 3D Graphics Engine Library maps the physics model and visuals to OpenGL ES 240 function calls to render the content with hardware acceleration. EGL 260 may be used to display the rendered content on a display of an apparatus.

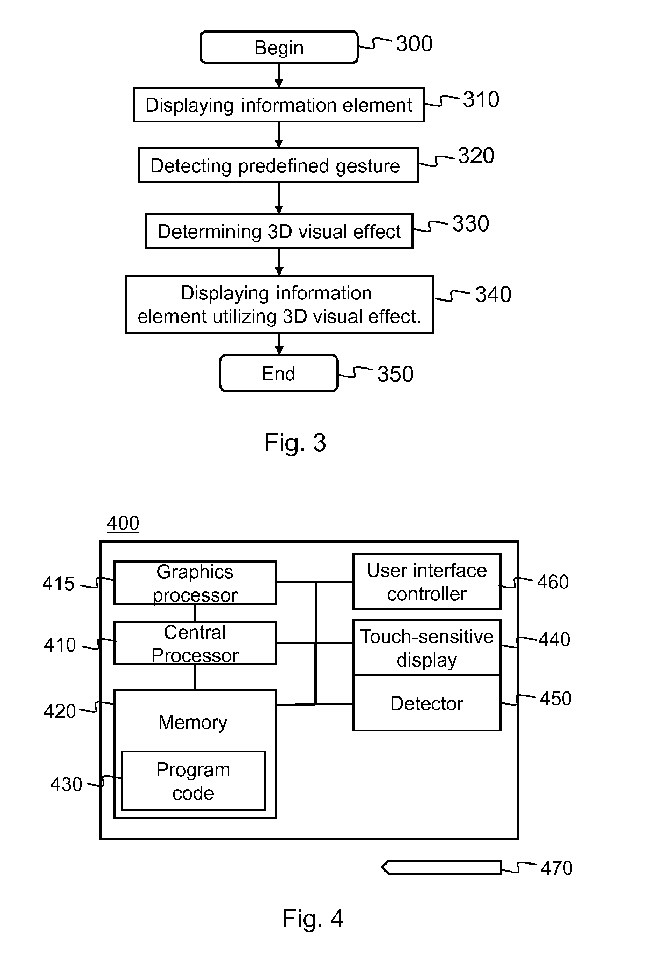

Fig. 3 shows a flow diagram showing operations in an apparatus in accordance with an example embodiment of the invention. In step 300, the method is started. In step 310, an information element is displayed. The information element may comprise a two- or three-dimensional (2D/3D) information element. In step 320, a predefined gesture on a touch sensitive display is detected based on touches by a user. In step 330, a three-dimensional visual effect is determined, on the information element, associated with the predefined gesture. The determination may be done on-the-fly without using embedded graphics. In step 340, the information element is displayed utilizing the three-dimensional visual effect. The method ends in step 350.

Fig. 4 presents an example block diagram of an apparatus 400 in which various embodiments of the invention may be applied. This may be a user equipment (UE), user device or apparatus, such as a mobile terminal, a tablet, a communication device or an electronic device with a touch-sensitive display.

The general structure of the apparatus 400 comprises a touch sensitive display 440, a detector 450 for sensing a touch point, a central processor 410, a graphics processor 415, and a memory 420. The apparatus 400 further comprises software 430 stored in the memory 420 and operable to be loaded into and executed in at least one of the processors 410, 415. The software 430 may comprise one or more software modules and can be in the form of a computer program product. The apparatus 400 may further comprise a user interface controller 460 coupled to at least one of the processors 410, 415 and a communication interface module (not shown). Furthermore, an actuator 470, for example a stylus, may be used to operate the apparatus 400 instead of a user's finger. The 2D/3D graphics engine software may be comprised by the software 430 and operable to be loaded into and executed in at least one of the processors 410,415.

The processor 410, 415 may be, e.g., a central processing unit (CPU), a microprocessor, a digital signal processor (DSP), a graphics processing unit, or the like. Fig. 4 shows two processors 410, 415 but the apparatus 400 may comprise a single processor or a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 400 may comprise a plurality of memories. The memory 420 may be constructed as a part of the apparatus 400 or it may be inserted into a slot, port, or the like of the apparatus 400 by a user. The memory 420 may serve the sole purpose of storing data, or it may be constructed as a part of an apparatus serving other purposes, such as processing data.

The touch-sensitive display 440 may be for example a liquid crystal display (LCD) or a light-emitting diode (LED) based display. The detector 450 may be integrated to the touch-sensitive display 440 as a touch-sensitive surface of a touch display or a touch screen. The detector 450 may also be included as a separate element, for example as a touchpad.

In an embodiment, the apparatus 400 is designed to recognize gestures applied to the touch-sensitive display 440 and detected by the detector 450 to control aspects of the graphics based on the gestures. In some cases, a gesture can be defined as a stylized interaction that can be mapped to one or more specific computing operations. The gestures can be made through various hand, and more particularly finger motions. Alternatively or additionally, the gestures can be made with a stylus 470. In all of these cases, the detector 450 receives the touches that are recognized to provide pre-defined gestures and the processor 410 executes instructions to carry out operations associated with the gestures. In addition, the memory block 420 can include a gesture operational program, which can be part of the operating system or a separate application. The gestural operation program generally can include a set of instructions that recognizes the occurrence of gestures and informs one or more software agents of the gestures and/or what action(s) to take in response to the gestures. Additional details regarding the various gestures that can be used as input commands are discussed further in the description.

In an embodiment, upon a user performing one or more gestures, the detector 450 relays gesture information to the processor 410. Using instructions from memory 420, and more particularly, the gestural operational program, the processor 410 interprets the gestures and controls different components of the apparatus 400, such as memory 420, a display 440 and user interface controller 460, based on the gestures. The gestures may be identified as commands for performing actions in applications stored in the memory 420, modifying image objects shown on the display 440, modifying data stored in memory 420, and/or for performing actions user interface controller 460.

In an embodiment, a detector 450 identifies user touches and provides user touch information to at least one processor 410, 415 associated with gesture identification instructions from a memory 420. The at least one processor 410, 415 associated with the gesture identification instructions may determine the touches to correspond a certain gesture. Furthermore, a corresponding three-dimensional visual effect may be determined based on the gesture.

In an embodiment, a detector 450 identifies user touches and may further determine the touches to correspond a certain gesture. The detector 450 may then provide the gesture information to at least one processor 410, 415 associated with instructions from a memory 420. Furthermore, a corresponding three-dimensional visual effect may be determined based on the gesture.

In an embodiment, a variety of touch-sensitive display technologies may be used for the apparatus 400.

A resistive touchscreen panel may be used, which panel is composed of several layers, the most important of which are two thin, electrically conductive layers separated by a narrow gap. When an object, such as a finger, presses down on a point on the panel's outer surface, the two metallic layers become connected at that point and the panel then behaves as a pair of voltage dividers with connected outputs. Thus, a change is caused in the electrical current, which is registered as a touch event and sent to the controller for processing. The cover sheet consists of a hard outer surface with a coated inner side. Touching the outer layer causes the conductive layers to touch, creating a signal that the analog controller can interpret and determine what the user wants to be done.

Surface acoustic wave (SAW) technology may be used, which technology using ultrasonic waves passing over the touchscreen panel. When the panel is touched, a portion of the wave is absorbed. This change in the ultrasonic waves registers the position of the touch event and sends such information to the controller for processing.

Capacitive touchscreen panel may be used, which panel consists of an insulator such as glass, coated with a transparent conductor such as indium tin oxide (ITO). As the human body is also an electrical conductor, touching the surface of the screen results in a distortion of the screen's electrostatic field, measurable as a change in capacitance. Different technologies may be used to determine the location of the touch. The location is sent to the controller for processing. Unlike a resistive touchscreen, one cannot use a capacitive touchscreen through most types of electrically insulating material, such as gloves but one requires a special capacitive stylus, or a special-application glove with an embroidered patch of conductive thread passing through it and contacting the user's fingertip.

Surface capacitance may be used, in which only one side of the insulator is coated with a conductive layer. A small voltage is applied to the layer, resulting in a uniform electrostatic field. When a conductor, such as a human finger, touches the uncoated surface, a capacitor is dynamically formed. The sensor's controller can determine the location of the touch indirectly from the change in the capacitance as measured from the four corners of the panel.

Projected Capacitive Touch (PCT) technology may be used, in which a capacitive technology permits more accurate and flexible operation, by etching the conductive layer. An X-Y grid is formed either by etching a single layer to form a grid pattern of electrodes, or by etching two separate, perpendicular layers of conductive material with parallel lines or tracks to form the grid (comparable to the pixel grid found in many LCD displays). The greater resolution of PCT allows operation without direct contact, such that the conducting layers can be coated with further protective insulating layers, and operate even under screen protectors, or behind weather- and vandal-proof glass.< Due to the top layer of a PCT being glass, PCT is a more robust solution versus resistive touch technology. Depending on the implementation, an active or passive stylus can be used instead of or in addition to a finger. This is common with point of sale devices that require signature capture. Gloved fingers may or may not be sensed, depending on the implementation and gain settings.

Mutual capacitance may be used. In mutual capacitive sensors, there is a capacitor at every intersection of each row and each column. A 16-by-14 array, for example, would have 224 independent capacitors. A voltage is applied to the rows or columns. Bringing a finger or conductive stylus close to the surface of the sensor changes the local electrostatic field which reduces the mutual capacitance. The capacitance change at every individual point on the grid can be measured to accurately determine the touch location by measuring the voltage in the other axis. Mutual capacitance allows multi-touch operation where multiple fingers, palms or styli can be accurately tracked at the same time.

Self-capacitance sensors may be used, having the same X-Y grid as mutual capacitance sensors, but the columns and rows operate independently. With self-capacitance, the capacitive load of a finger is measured on each column or row electrode by a current meter.

The user interface controller 460 may comprise circuitry for receiving input from a user of the apparatus 400, e.g., via a keyboard, graphical user interface shown on the display 440 of the apparatus 400, speech recognition circuitry, or an accessory device, such as a headset, and for providing output to the user via, e.g., a graphical user interface or a loudspeaker.

A skilled person appreciates that in addition to the elements shown in Fig. 4, the apparatus 400 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 400 may comprise a disposable or rechargeable battery (not shown) for powering the apparatus 400 when external power if external power supply is not available.

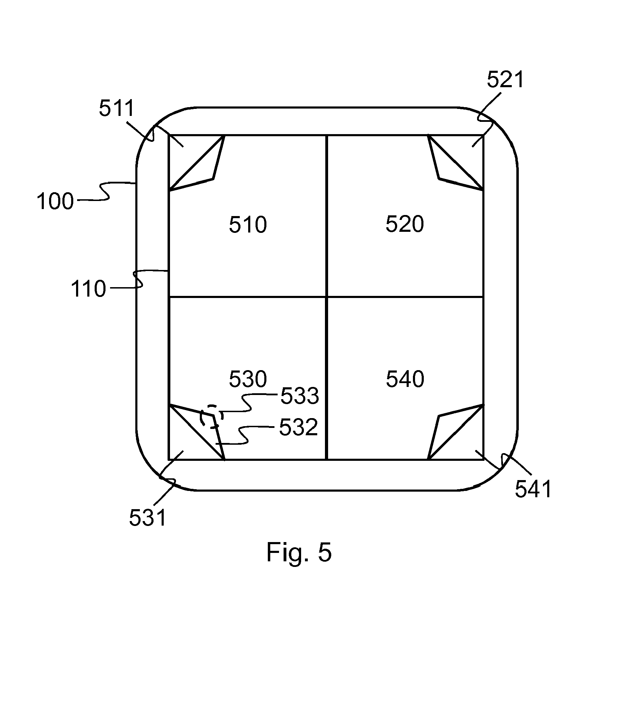

Fig. 5 shows a schematic picture of an apparatus 100 according to an example embodiment of the invention. The apparatus 100 comprises a touch-sensitive surface, such as a touch sensitive display 110. The apparatus 100 may be held and operated in a vertical mode or a landscape mode. The touch sensitive display 110 is configured to display information to a user of the apparatus 100. Furthermore, the apparatus comprises a detector configured to detect a touch point of the user on the touch sensitive display 110. The touch sensitive display comprises a predetermined information element 510, 520, 530, 540, such as a screen lock information element. The information element 510, 520, 530, 540 may provide screen lock information on the display for the user when the apparatus 100 is screen locked. Screen lock is a feature to reduce erroneous touches of the touch-sensitive display 110 by the user when the apparatus 100 is not actively used. Screen lock feature also provides power saving.

In an embodiment, a screen lock information element may comprise a plurality of information elements. In Fig. 5, four screen lock information elements 510, 520, 530, 540 are illustrated. The screen lock information element 510, 520, 530, 540 may comprise a folded corner 532 to enable user gestures on the particular information element 530. For example, grabbing the folded corner 532 with at least two fingers from different sides of the corner 532 at a touch point 533 may provide a peeling visual effect for the folded corner 532 and the information element 530. Similarly, any information element 510, 520, 530, 540 may be touched and grabbed, or any pre-defined gesture with corresponding visual effect may be utilized. The folded corner 532 may also be located to the inner corner of the information element.

In an embodiment, display portions 511, 521, 531, 541 may be revealed under the folded corners 532. The display portions may be used for screen lock information, for example. Missed call information may be provided in the first display portion 511, received short message information may be provided in the second display portion 521, received e-mail information may be provided in the third display portion 531 and calendar alarm information may be provided in the fourth display portion 541, for example. The user may define the information used in the display portions 511, 521, 531, 541 via device settings, for example.

In an embodiment, a single information element may be used covering the display area of all elements 510, 520, 530, 540 but comprising four foldable corners 532 and revealing four display portions 511, 521, 531, 541.

In an embodiment, the foldable corners 532 may be unfolded in screen lock mode in case the allocated screen lock information comprises no user alerts, such as missed calls or received messages. Furthermore, in case an information element 530 is allocated for missed calls information in the screen lock mode and missed calls exist, the corner 532 may become folded and even comprise an animated visual effect, for example a waving effect, to attract user's attention.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. An apparatus comprising:
a touch sensitive display for displaying an information element;
a detector configured to detect touches of a user on the touch sensitive display;
at least one processor; and
at least one memory including computer program code, the at least one memory and the computer program code being configured to, with the at least one processor, cause the apparatus at least to:
display the information element;
detect a predefined gesture on the touch sensitive display based on the touches of the user;
determine a three-dimensional visual effect, on the information element, associated with the predefined gesture; and
display the information element utilizing the three-dimensional visual effect.

2. The apparatus of claim 1, the at least one memory and the computer program code being further configured to, with the at least one processor, cause the apparatus at least to:
determine an application providing the information element; and
determine the three-dimensional visual effect, on the information element, associated with the predefined gesture and the determined application.

3. The apparatus of claim 2, the at least one memory and the computer program code being further configured to, with the at least one processor, cause the apparatus at least to:
maintain a set of visual effects with associated gestures for each application.

4. The apparatus of claim 2 or 3, the at least one memory and the computer program code being further configured to, with the at least one processor, cause the apparatus at least to:
determine the visual effect on-the-fly by a three-dimension graphics engine.

5. The apparatus of any of claims 1 to 4, wherein the information element comprising at least one of the following:
- a page of a document;
- a digital image;
- a contact card;
- screen lock information;
- a message; and
- a directory.

6. The apparatus of claim 5, wherein the three-dimensional visual effect relates to at least one of the following:
- turning a page of a document;
- touching a page of a document;
- navigating a directory;
- trashing a document;
- opening a document;
- closing a document;
- moving a digital image;
- scrolling a digital image;
- opening a screen lock;
- opening a screen lock information element;
- opening a user alert item;
- scrolling a contact card; and
- scrolling a message.

7. The apparatus of claim 1, wherein the information element comprising a two-dimensional information element.

8. The apparatus of claim 7, the at least one memory and the computer program code being further configured to, with the at least one processor, cause the apparatus at least to:
determine a three-dimensional visual effect, on the two-dimensional information element, associated with the predefined gesture;
process the two-dimensional information element using the three-dimensional visual effect to provide a three-dimensional information element; and
display the three-dimensional information element utilizing the three-dimensional visual effect.

9. The apparatus of any of claims 1 to 8, wherein the information element comprising a three-dimensional information element.

10. The apparatus of claim 9, the at least one memory and the computer program code being further configured to, with the at least one processor, cause the apparatus at least to:
determine a three-dimensional visual effect, on the three-dimensional information element, associated with the predefined gesture;
process the three-dimensional information element using the three-dimensional visual effect; and
display the three-dimensional information element utilizing the three-dimensional visual effect.

11. The method comprising:
displaying an information element;
detecting a predefined gesture on a touch sensitive display based on touches by a user;
determining a three-dimensional visual effect, on the information element, associated with the predefined gesture; and
displaying the information element utilizing the three-dimensional visual effect.

12. The method of claim 11, further comprising:
determining an application providing the information element; and
determining the three-dimensional visual effect, on the information element, associated with the predefined gesture and the determined application.

13. The method of claim 11, further comprising:
determining the three-dimensional visual effect on-the-fly by a three-dimension graphics engine.

14. The method of any of claims 11 to 13, further comprising:
defining a sweep function configured to detect, using the detector, a sweep gesture on the touch sensitive display between a first and a second touch point; and
detecting the predefined gesture on a touch sensitive display using the sweep function.

15. A computer program embodied on a computer readable medium comprising computer executable program code which, when executed by at least one processor of an apparatus, causes the apparatus to:
display an information element;
detect a predefined gesture on a touch sensitive display based on touches by the user;
determine a three-dimensional visual effect, on the information element, associated with the predefined gesture; and
display the information element utilizing the three-dimensional visual effect.
